(19) Europäisches Patentamt

European Patent Office

Office européen des brevets

(11) Veröffentlichungsnummer: **0 280 029 B1**

# (12) EUROPÄISCHE PATENTSCHRIFT

(45) Veröffentlichungstag der Patentschrift: **13.11.91**

(21) Anmeldenummer: **88100705.8**

(22) Anmeldetag: **20.01.88**

(51) Int. Cl.5: **C02F 1/46, C02F 9/00, C02F 1/28**

(54) Simultane Abreicherung von Schwermetallen und oxidierbaren Schadstoffen aus Abwässern.

(30) Priorität: **25.02.87 DE 3705956**

(43) Veröffentlichungstag der Anmeldung:
**31.08.88 Patentblatt 88/35**

(45) Bekanntmachung des Hinweises auf die
Patenterteilung:
**13.11.91 Patentblatt 91/46**

(84) Benannte Vertragsstaaten:
**FR GB IT**

(56) Entgegenhaltungen:
| | |
|---|---|
| EP-A- 0 141 780 | DE-A- 1 949 129 |
| DE-A- 2 617 991 | DE-A- 3 522 466 |
| FR-A- 2 116 435 | FR-A- 2 240 892 |
| FR-A- 2 392 942 | FR-A- 2 534 900 |
| US-A- 2 773 025 | US-A- 4 189 362 |
| US-A- 4 218 315 | US-A- 4 445 990 |

"LEHR- UND HANDBUCH DER ABWASSER-
TECHNIK", Band VII, Auflage 3, Seiten
206-214, 241-248, 324-327, 420-421, Ernst &
Sohn, Berlin, DE

(73) Patentinhaber: **DORNIER GMBH**
**Postfach 1420**
**W-7990 Friedrichshafen 1(DE)**

(72) Erfinder: **Kirch, Rudolf, Dr.**
**Meersburger Strasse 25**
**W-7997 Immenstaad(DE)**

(74) Vertreter: **Landsmann, Ralf, Dipl.-Ing.**
**DORNIER GMBH - Patentabteilung - Kleeweg**
**3**
**W-7990 Friedrichshafen 1(DE)**

## Beschreibung

Die Erfindung betrifft ein Verfahren zur Beseitigung von Schwermetallen und oxidierbaren Schadstoffen aus alkalischen Abwässern nach dem Oberbegriff des Anspruchs.

In Betrieben der metalloberflächenverarbeitenden Industrie fallen die nach Art und Zusammensetzung unterschiedlichsten Abwässer an. Häufig handelt es sich dabei um Abwässer, die neben verschiedenen Schwermetallen auch organische oder anorganische Komplexbildner sowie tensidartige organische Verbindungen enthalten. In der Regel werden die nur in bestimmten Zeitintervallen anfallenden, höher konzentrierten Abwässer, beispielsweise verbrauchte Bäder und Standspülen, zusammen mit den grösseren Spülwassermengen behandelt. Für die Entgiftung werden dabei grosse Chemikalienmengen verbraucht und in mehreren Verfahrensschritten wird Schwermetallschlamm erzeugt. Der Schlamm kann aufgrund der Metallanteile dem kommunalen Klärschlamm nicht beigemengt und muß als Sondermüll kostspielig deponiert werden, wobei er ein enormes Umweltgefährdungspotential darstellt. Es ist bekannt, dass unter bestimmten Voraussetzungen anionische Störstoffe elektrolytisch oxidierbar sind, jedoch gelingt eine vollständige Abreicherung bei sinkender Konzentration nicht.

Aus der FR-A- 2 240 892 ist ein Verfahren zur Behandlung von industriellen Abwässern bekannt, wobei Metalle kathodisch abgeschieden werden und andere Schadstoffe anodisch oxidiert werden und danach der abgereicherte Elektrolyt adsorptiv von Restschadstoffen entsorgt wird. Eine Anwendung auf schwermetallhaltige Abwässer, eine simultane Prozeßführung oder die Zugabe von Umkomplexierungsmitteln sind nicht vorgeschlagen.

Der Erfindung liegt die Aufgabe zugrunde, ein Verfahren anzugeben, das es ermöglicht, sowohl Schwermetalle als auch andere organische und/oder anorganische Störstoffe aus konzentrierten alkalischen Abwässern kostengünstig in einer Weise zu eliminieren, die die Erzeugung von Schwermetallschlamm vermeidet und zu einer Unterschreitung der Einleitgrenzwerte von Industrieabwässern führt.

Die Aufgabe wird erfindungsgemäss durch ein Verfahren mit den Merkmalen des Anspruchs gelöst. Dabei werden zunächst in einem Elektrolysemodul die Schwermetallanteile des Abwassers an einer Edelstahlkathode abgeschieden und gleichzeitig, aufgrund der hohen anodischen Stromdichte, organische und/oder anorganische Störstoffe an der Anode partiell oder vollständig aufoxidiert. Als Anodenmaterial kommt dabei ein spezielles bleidioxidbeschichtetes Titan oder Graphit zum Einsatz. Um die in alkalischen Abwässern häufig komplex gebundenen Schwermetalle für die elektrolytische Behandlung zugänglich zu machen, ist es notwendig, stärkere Schwermetallkomplexe aufzuspalten und in schwächere Komplexe einzubinden. Die dazu erforderliche Stoffmenge an Umkomplexierungsmittel hängt erstens von der gesamten Schwermetallkonzentration und zweitens von der chemischen Art und Konzentration von ursprünglichen, im Abwasser vorhandenen Komplexbildnern ab. Das Umkomplexierungsmittel, beispielsweise 25 %-iges Ammoniakwasser, wird entweder kontinuierlich oder in definierten Zeitintervallen von vorzugsweise 1 Stunde in einer Menge zudosiert, die im Anwendungsbeispiel über den gesamten Behandlungszeitraum höchstens 3 Promille der Abwassermenge beträgt.

Ammoniakwasser eignet sich insbesondere als Umkomplexierungsmittel, da die resultierenden ammoniakalischen Schwermetallkomplexe unbeständig und insofern für die Abreicherung leicht zugänglich sind. Nach ca. 10 Stunden kann häufig die elektrolytische Behandlung abgebrochen werden. Danach wird je nach Anwendungsfall erneut Umkomplexierungsmittel und/oder ein chemisches Oxidationsmittel, beispielsweise 35 %-ige $H_2O_2$-Lösung, zudosiert und das Abwasser über eine spezielle Adsorberkolonne, eine RMA-Säule, geführt. Eine RMA-Säule (RMA = Rückgewinnung von Metallen aus Abwässern) ist eine Kolonne, die Ionenaustauscher, Adsorberharze oder Aktivkohlen enthält. Das auf diese Weise behandelte Abwasser wird dadurch vollständig bis unterhalb der Einleitgrenzwerte für den CSB-Wert (Wert für den chemischen Sauerstoff-Bedarf eines Frisch- oder Abwassers) und die jeweiligen Schwermetallkonzentrationen abgereichert. Vorteilhafterweise lassen sich mehrere Elektrolysemodule hintereinanderschalten, um so grössere Abwassermengen zu behandeln. Bis zu 100 mal pro Stunde wird mit einer externen Pumpe das konzentrierte Abwasser im Modul umgewälzt.

Beim vorgeschlagenen Verfahren kommen als Adsorbenzien in Frage Aktivkohlen unterschiedlicher Qualität, Porosität und Porenstruktur; Adsorbenharze wie Ionenaustauscher auf Kunstharzbasis (Polystyrol, Polyacrylat mit funktionellen Sulfonsäuren-, Carbonsäuren- oder Amingruppen). Als Umkomplexierungsmittel können außer Ammoniak vor allem Alkalihydroxide (NaOH, KOH), Pyro- und Polyphosphate, eventuell jedoch auch Triethanolamin oder die unterschiedlichsten organischen Carbonsäuren zum Einsatz kommen.

Als weitere Oxiationsmittel könnten Hypochlorit, Peroxydisulfat, Perchlorat oder auch Ozon verwendet werden, wobei jedoch ungünstige Nebeneffekte nicht vernachlässigt werden dürfen.

Mit dem erfindungsgemässen Verfahren, der Behandlung im Elektrolysemodul und in der Adsorbersäule, ist die vollständige Eliminierung der im Abwasser oberflächenbehandelnder Betriebe anfallenden Schadstoffe unter wirtschaftlichen Aspekten möglich. Wesentliche Gesichtspunkte dabei sind die simultane Abtrennung von Schwermetallen und die Abreicherung von anionischen Störstoffen in der elektrolytischen Stufe, sowie die Entfernung von Restschadstoffen in einer speziellen Adsorberkolonne. Durch diese kostengünstige neue Abwasserbehandlung werden die im Gesetz festgelegten Einleitgrenzwerte für Abwässer von Industriebetrieben unterschritten.

Anwendungsbeispiel:

Behandlung eines verbrauchten elektrolytischen Entfettungsbades aus einem Galvanikbetrieb.

Ein verbrauchtes elektrolytsiches Entfettungsbad war stark cyanidhaltig. Es enthielt neben gelösten und komplex gebundenen Schwermetallen (Cu, Ni, Cd, Cr, Zn, Fe, Sn) mit einer Gesamtmetallkonzentration von 5.5 g/l und Cyaniden in einer Konzentration von 60 g/l, vor allem Tenside und Tensidreste unbekannter Konzentration. Der CSB-Wert des verbrauchten Bades lag bei 170 000 ppm, die extrahierbaren Ölanteile bei 60 ppm. Nach einer 10-stündigen elektrolytischen Behandlung nach erfinderischem Verfahren (kathodische Stromdichte = 2.6 A/dm$^2$, anodische Stromdichte = 4.4 A/dm$^2$) waren die Schwermetalle bis zu einer Gesamtkonzentration unterhalb von 100 ppm kathodisch abgeschieden und simultan das überschüssige Komplexierungsmittel Cyanid an der Anode nahezu vollständig zu Cyanat bzw. zu Kohlendioxid und Stickstoff aufoxidiert. Die Restcyanidkonzentration lag in der gleichen Grössenordnung wie die Kozentration für die Metalle. Der CSB-Abbau war, bezogen auf den ursprünglichen Wert für den chemischen Sauerstoffbedarf, grösser als 96 %. Nachdem etwa 3 ml 25 %-iges Ammoniakwasser sowie 3 ml 35 %-iger H$_2$O$_2$-Lösung je Liter Abwasser zudosiert worden war, wurde das Abwasser über eine mit speziellen Adsorbenzien gefüllte RMA-Säule geführt. Danach lagen alle maßgebenden Parameter für das Abwasser unterhalb der Einleitgrenzwerte.

## Patentansprüche

1. Verfahren zur Beseitigung von Schwermetallen und oxidierbaren Schadstoffen aus alkalischen Abwässern in einem Elektrolysemodul, wobei die Schwermetalle in metallischer Form kathodisch abgeschieden werden und andere Schadstoffe anodisch oxidiert werden und danach der abgereicherte Elektrolyt adsorptiv von Restschadstoffen entsorgt wird, **dadurch gekennzeichnet,** dass die kathodische Abscheidung an einer Edelstahlkathode und die anodische Oxidation an einer Anode aus bleioxidbeschichtetem Titan oder Graphit simultan vorgenommen wird, und während der elektrolytischen Behandlung Umkomplexierungsmittel zugesetzt werden.

## Claims

1. Method of removing heavy metals and oxidizable pollutants from alkaline sewage in an electrolytic module, whereby the heavy metals in metallic form are separated cathodically and other pollutants are oxidized anodically and subsequently the depleted electrolyte is disposed of remaining pollutants in an adsorptive manner, characterised in that the cathodic separation is performed at a fine steel cathode and the anodic oxidation is simultaneously performed at an anode of titanium or graphite which is coated with lead oxide and complexing agents are added during the electrolytic treatment.

## Revendications

1. Procédé d'élimination des métaux lourds et des composés nuisibles oxydables des eaux résiduaires alcalines dans un module d'électrolyse, où les métaux lourds sont séparés à la cathode sous forme métallique et d'autres composés nuisibles sont oxydés à l'anode, puis l'électrolyte appauvri est débarrassé par adsorption des composés nuisibles résiduels, caractérisé en ce qu'on procède de façon simultanée à la séparation cathodique sur une cathode en acier spécial et à l'oxydation anodique sur une anode en titane recouvert d'oxyde de plomb ou en graphite, et en ce qu'on ajoute pendant le traitement électrolytique un agent complexant.